# EUROPÄISCHE PATENTSCHRIFT

(11) **EP 1 241 131 B1**
(45) Veröffentlichungstag und Bekanntmachung des Hinweises auf die Patenterteilung: **04.01.2006**
(21) Anmeldenummer: 02005371.6
(22) Anmeldetag: 15.03.2002
(51) Int. Cl.: C01B 25/40, C01B 25/38, C04B 22/16

(54) **Verwendung von polymeren Aluminiumphosphaten in Putzformulierungen**
Use of polymeric aluminium phosphates in plaster compositions
Utilisation de polymères de phosphates d'aluminium dans des composition de plâtre

(30) Priorität: 16.03.2001 DE 10113287
(43) Veröffentlichungstag der Anmeldung: 18.09.2002
(73) Patentinhaber: BK Giulini GmbH, 67065 Ludwigshafen (DE)
(72) Erfinder: Weber, Siegbert, 68526 Ladenburg (DE); Wahl, Freidrich, 68219 Manheim (DE); Staffel, Thomas, Dr., 67269 Grünstadt (DE)

(56) Entgegenhaltungen:
- DE-A- 2 264 475
- US-A- 3 445 257
- US-A- 3 943 231
- US-A- 4 138 261
- US-A- 4 395 387
- US-A- 5 496 529
- PATENT ABSTRACTS OF JAPAN vol. 011, no. 150 (C-422), 15. Mai 1987 (1987-05-15) & JP 61 286209 A (TEIKOKU KAKO KK), 16. Dezember 1986 (1986-12-16)

## Beschreibung

Polymere Aluminiumphosphate sind in der Literatur als Härter für Wasserglas bereits bekannt.

Wasserglas war schon den Alchimisten des Mittelalters als "Liquor Silicum" bekannt und findet seit dieser Zeit vielfältige Verwendung als chemischer Rohstoff, Prozesshilfsmittel und mineralisches Bindemittel.

In der DE 22 30 175 wird die Herstellung und Verwendung von kondensierten Aluminiumphosphaten beschrieben. In diesem Verfahren wird Tonerdehydrat mit Phosphorsäure umgesetzt und das erhaltene Produkt sprühgetrocknet und anschließend getempert. Dieses Produkt ist vollkommen röntgenamorph und hat ein Schüttgewicht von 50 bis 200 g/l.

In der DE 41 03 773 C1 wird eine Bauwerksabdichtung beschrieben, die aus einer Grundierung besteht, die auf ein Mauerwerk z.B. Kalksandstein, Betonstein, Gasbeton, Putz aufgebracht wird und aus einer abdichtenden Dickbeschichtung, vorzugsweise einer Bitumen-Kautschuk-Dickbeschichtung, die auf die Grundierung aufgebracht wird, besteht. Die hier beschriebene Grundierung enthält auch Wasserglas. Die Verwendung von polymeren Aluminiumphosphaten als Härter wird hier nicht offenbart.

In der DE OS 29 13 263 wird die Abdichtung von Mauerwerk durch Verkieselung mit Wasserglas erreicht.

Chemische Abbindeprozesse laufen z.B. bei den Silikatfarben ab, wo Kohlendioxid aus der Luft in die dünne Farbschicht eindringt und durch Kieselsäurebildung die Vernetzung der Silikate bewirkt und damit Pigmente und Füllstoffe mit dem Untergrund zu einer festen Schicht verbindet.

Beim Silikatputz läuft der gleiche Abbindemechanismus ab, allerdings stellt die dickere Putzschicht für Kohlendioxid eine Diffusionsbarriere dar, wodurch der Abbindeprozess relativ langsam abläuft Gerade in der kalten Jahreszeit kann die Reaktion so stark verlangsamt sein, daß ein solches System nicht mehr wirkungsvoll aushärten kann.

Es stellte sich somit die Aufgabe, besser wirksame Härtersysteme für Putze zur Verfügung zu stellen, die sowohl eine schnellere Aushärtung bewirken, als auch bei niedrigen Temperaturen und hohen Luftfeuchten wirksam sind. Besonders beim sog. Aussenputz ist es ein Problem, bei tieferen Temperaturen von unter 8 °C eine gute Abbindung zu erreichen. Im Falle eines Schlagregens sollte der ausgcbrachte Putz ebenfalls möglichst schnell eine Aushärtung erreichen, die vom Regen nicht mehr aufgelöst werden kann.
Die Lösung dieser Aufgaben besteht in der Herstellung und Verwendung von polymeren Aluminiumphosphat als Mittel zur Regulierung der Abbindung, insbesondere der Härtung von Putzen, wobei das polymere Aluminiumphosphat folgende Eigenschaften aufweist:
- P : A1 Molverhältnis von 2: 1 bis 2,8 : 1
- das Verhältnis der durch Temperung erhältlichen Formen B und A bewegt sich zwischen 2: 1 bis 9 : 1
- der amorphe Materialanteil beträgt 15 bis 70 %, vorzugsweise 20 bis 50 %
- die Korngrößenverteilung 0,1 µm bis 100 µm
- der wasserlöslicher Anteil ist kleiner als 2 %
- der Gehalt an Al₄(P₄O₁₂)₃ ist größer als 1 %

Das polymere Aluminiumphosphat kann sowohl in Form eines feinteiligen Pulvers, als auch in Form einer wasserfreien Suspension oder Paste verwendet werden. Als Flüssigkeiten für die Suspendierung bzw. Pastenherstellung eignen sich wasserfreie, hydrophile Lösemittel, wobei die so suspendierten Pulver bis zu 75 Gew. % Feststoffgehalt aufweisen können. Für die Suspendierung werden demnach die wasserlöslichen und wasserunlöslichen niederen Alkohole, Copolymere von Ethylenoxid/Propylenoxid, die Blockpolymeren von Ethylenoxid/Propylenoxid, Mono- und Dimethylenglykol, Alkylether, insbesondere Triethylenglycolalkylether und Dipropylenglycolalkylether eingesetzt. Die Aufzählung der Flüssigkeiten ist nicht vollständig, nicht genannte, aber geeignete Lösemittel werden von der vorliegenden Erfindung mit erfasst.
Bei der Herstellung der Suspension hat sich die Naßmahlung des Pulvers als Vorteil erwiesen.
Besonders technisch gut geeignet ist die Verwendung einer Kugelmühle.

Die Vorteile der Verwendung von polymeren Aluminiumphosphaten als Härter zeichnen sich dadurch aus, daß die Abbindezeit durch die Konzentration des Härters gesteuert werden kann und durch Auswahl der "richtigen" Härtertype für jedes System der optimale Abbindeverlauf einstellbar ist.
Die Menge an polymerem Aluminiumphosphat als Härter in der Suspension beträgt erfindungsgemäß 0,5 bis 5 Gew. %, bevorzugt 1 bis 4 Gew. %, bezogen auf die Menge an Putz.

Die Herstellung der polymeren Aluminiumphosphate erfolgt unter Verwendung von technischer Phosphorsäure und Aluminiumhydroxid oder Aluminiumoxid, das dadurch gekennzeichnet ist, daß Aluminiumhydroxid oder Aluminiumoxyd in konzentrierter Phosphorsäure aufgelöst wird, die dabei entstandene Aluminiumdihydrogenphosphat-Lösung auf einem geeigneten Aggregat z.B. Sprüh-, Trommel- oder Walzentrockner, getrocknet wird und in einem zweiten Verfahrensschritt dieses Zwischenprodukt durch thermische Entwässerung zu Aluminiumpolyphosphat kondensiert wird. Der Wasserdampfdruck bei der Entwässerung beträgt mindestens 500 mbar, wobei bei der Temperung ein Temperaturprofil durchfahren wird, das folgende Stufen enthält:
1. Stufe: nicht über 150 °C
2. Stufe : 300 °C bis 500 °C
3. Stufe: 500 °C bis 700 °C

Der Reaktionsverlauf ist wie folgt:

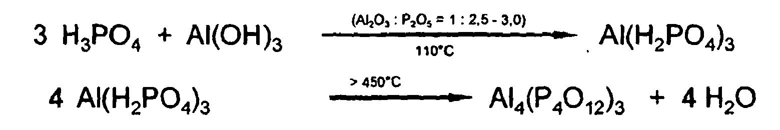

Der oben beschriebene zweite Verfahrensschritt ist in der Praxis ein komplexer Vorgang und die weitergehende Kondensation führt zu strukturell anderen Aluminiumpolyphosphaten. Dabei entsteht eine Mischung von polymeren Aluminiumpolyphosphaten der Form A (cyclisches Polyphosphat) und Form B (lineares Polyphosphat).

Das Verhältnis dieser beiden Formen A und B, sowie der vorhandene Anteil an amorphen Aluminiumpolyphosphaten wird bei der Produktion gesteuert und somit gezielt für das erfmdungsgemäße Anwendungszweck eingestellt.

Im folgenden Schema kann man die einzelnen Stufen der Temperung gut erkennen:

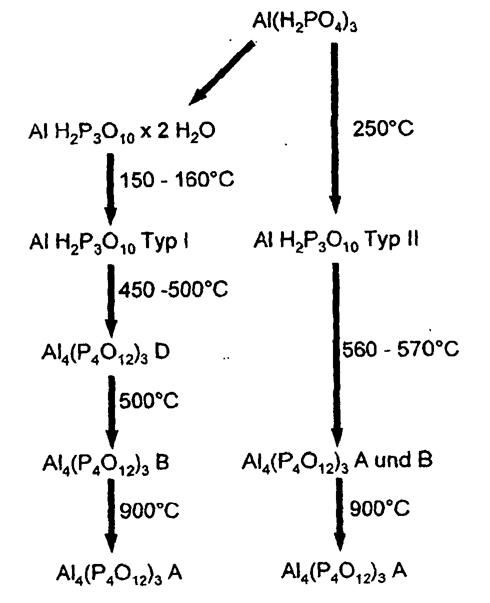

Die erhaltenen Produkttypen, die eine Mischung der Formen A und B sind, sind weiße bis leicht graue Feststoffe, die durch Mahlung zu sehr feinen Pulvern aufbereitet werden oder durch Suspendierung in Form einer wasserfreien Suspension oder Paste zur Anwendung kommen.
Bisher haben sich zwei Produkttypen für die technische Anwendung etabliert, die untenstehend als Produkt 1 und Produkt 2 charakterisiert sind. Diese Produkte sind mit denen im Schema als Typ I und II bezeichneten Zwischenprodukten nicht identisch.

Damit ist es nun möglich die Anwendung von Wasserglas auf Systeme zu übertragen, die durch zu hohe Schichtdicken bisher praktisch nicht durchhärtbar waren. Damit kann die klassische Anwendungsvielfalt von Wasserglas um ein Vielfaches erweitert werden.

**Produkt 1.**

| | |
|---|---|
| Molverhältnis P : Al | ca. 2,8 |
| Verhältnis Al₄(P₄O₁₂)₃ Form B : Form A | ca. 8 |
| Gehalt an AlH₂P₃O₁₀ | < 1 % |
| Wasserlöslicher Anteil | < 2 % |
| amorpher Anteil | < 20 % |
| Korngröβe D₅₀ | < 30 µm |

**Produkt 2.**

| | |
|---|---|
| Molverhältnis P : Al | ca. 2,8 |
| Verhältnis Al₄(P₄O₁₂)₃ Form B : Form A | ca. 3 |
| Gehalt an AlH₂P₃O₁₀ | < 1-2 % |
| Wasserlöslicher Anteil | < 2 % |
| amorpher Anteil | ca 50 % |
| Korngröβe D₅₀ | < 30 µm |

### I. Messung des Abbindeverhaltens mit der Ultraschallmethode

Benutzt wird das Ultrasonic - Prüfgerät BP - 7 der Firma Dr. Steinkamp. Enthalten ist eine Datenspeicherung, so daß nach beendeter Meßvorgänge die Daten in den PC eingelesen und z.B. mit Excel zum Diagramm bearbeitet werden können.
Angeschlossen werden ein Sender und ein Empfänger für Ultraschall. Das Prinzip besteht darin, daß in einem immer härter werdenden Probeansatz die Geschwindigkeit des Ultraschallsignals mit dem Härtevorgang steigt, d.h. daß nach der Diagrammauswertung die Ultraschallkurve den Härteverlauf des Probeansatzes über die vergangene Zeit anzeigt.
Die beiden Sonden stecken in einer Form aus Kunststoff, welche in der Mitte eine 60 mm kreisförmige Öffnung besitzt, in welche der Probeansatz luftblasenfrei eingefüllt wird. Direkt nach dem Einfüllen wird mit der ersten Messung begonnen.

| | | |
|---|---|---|
| Geräteeinstellung: | Meßabstand: | 10 mm |
| | Meßtakt: | 3 Minuten |
| | Speicherung: | Mittelwert aus 5 Messungen |

Die Ultraschallmethode wurde von T. Staffel, G. Brix, Untersuchung des Abbindeverhaltens von Zementmischungen mit der Ultraschallmethode, in Con. Chem. Journal, (1996), Heft 3 veröffentlicht.

### Erhaltenen Diagramme

Der Diagrammverlauf zeigt die Ultraschallgeschwindigkeit innerhalb eines Probeansatzes in Abhängigkeit von der Zeit. Bei noch weichem Ansatz ist die Ultraschallgeschwindigkeit klein, mit zunehmender Härte nimmt die Schallgeschwindigkeit zu. Es lassen sich so direkte Darstellungen des Härteverlaufes zeigen und vergleichen.

Die Messung der Korngrößen erfolgte mit einem Gerät der Fa. Malvem, Master Sizer S (MAM 5004)

### II. Beispiele

### 1. Verfahren zur Herstellung von pulverförmigem, polymerem Aluminiumphosphat

3,1 kg Aluminiumhydroxid (Feuchthydrat) werden in 13,5 kg Phosphorsäure mit 60 % P₂O₅ , die auf 70°C vorgewärmt ist, eingerührt, wobei sich das Tonerdehydrat unter Wärmeentwicklung löst. Die so erhaltene klare Lösung wird auf einem Sprühtrockner getrocknet. Dabei ist zu beachten, dass eine Produkttemperatur von 150°C nicht überschritten wird. Anschließend wird das monomere Aluminiumphosphat in einem indirekt beheizten Trockner, einem Hordentrockner bei einer Verweilzeit 3 Stunden auf 400°C und danach 30 Minuten bei 600°C zu dem gewünschten Aluminiumpolyphosphat kondensiert. Dabei ist zu beachten, dass über dem Produkt ein Wasserdampfpartialdruck von 500 mbar erhalten bleibt. Nach dem Abkühlen wird das Endprodukt auf eine Komgröße von kleiner 30 µm fein vermahlen.

### 2. Verfahren zur Herstellun einer Suspension oder Paste des polymeren Aluminium phosuhates

Das Produkt nach Beispiel 1 wird zu einer Lösung von 1- Butanol (wasserfrei) unter Rühren bei Zimmertemperatur zugefügt. Die Zudosierung muß langsam erfolgen. Es entsteht eine leicht graue hochviskose Suspension mit einem Feststoffgehalt von 70 %

Die erfindungsgemäß hergestellten Produkte wurden in Dispersions - Silikat - Putzen, insbesondere auch in Kunstharzputzen und in säurefesten Silikatmörtel auf ihre Eignung als Härter getestet.

Die Beispiele 1 bis 4 stellen Beispiele für die Verwendung von polymeren Aluminium phosphat als Paste dar.

### Beispiel 1

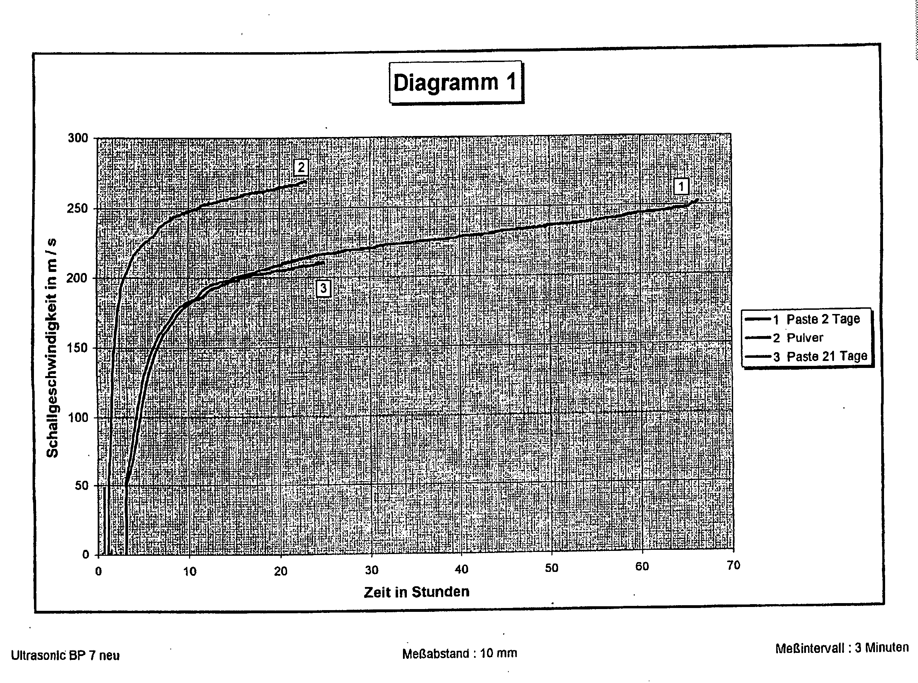

Eine Paste aus 56 % des polymeren Aluminiumphosphates und 44 % Polydiol 300 wird bei einem Silikatputz eingesetzt. Pro 100 g Putz werden 7,1 g Paste eingerührt. Das Diagramm 1 zeigt die Wirkung des Härterpulvers im Vergleich zur Paste. Die Paste wirkt leicht verzögert.

### Beispiel 2

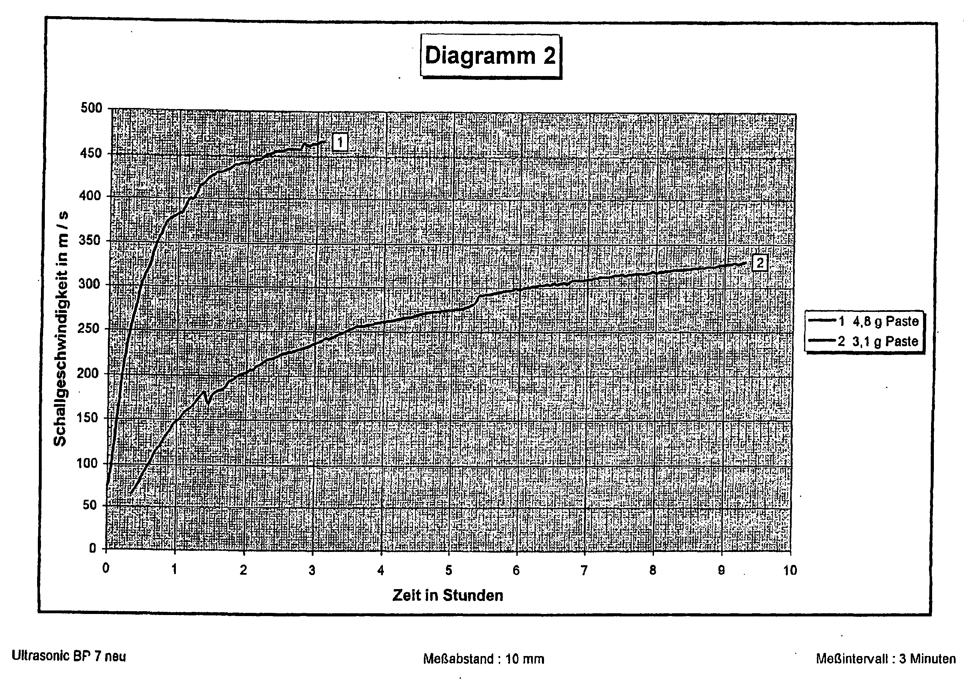

Eine Paste aus 62,5 % polymeren Aluminiumphosphates und 37,5 % Polyalkohol wird an einem Putzsystem vermessen. Es werden zwei Einsatzmengen getestet, 4,8 g Paste pro 100 g Putz und 3,1 g Paste pro 100 g Putz. Diagramm 2 zeigt die Steuerbarkeit des Abbindeverhaltens über die Einsatzmenge der Paste.

### Beispiel 3

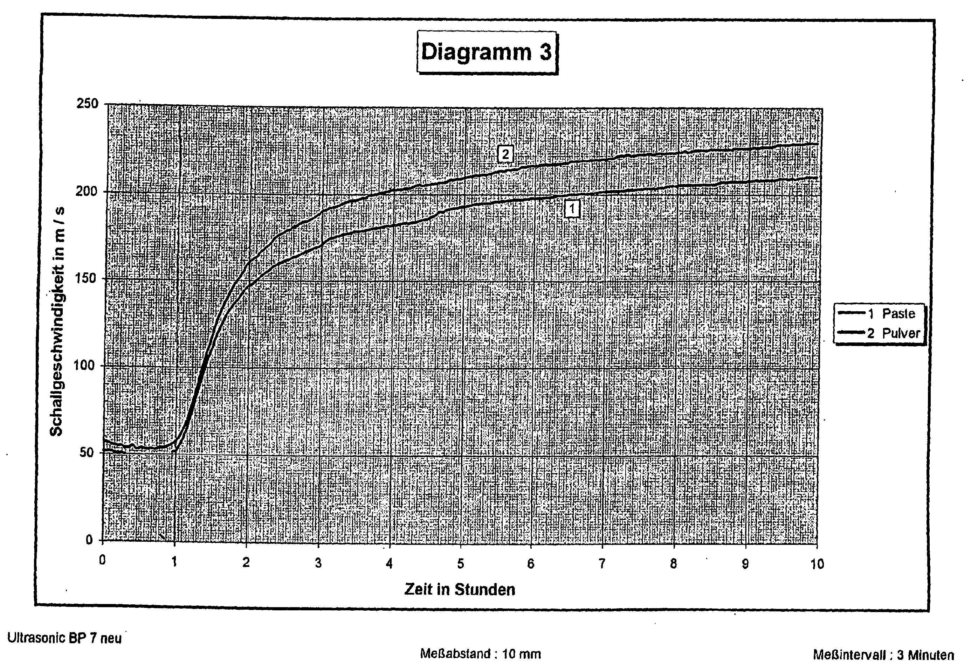

Eine Paste aus 60 % polymeren Aluminiumphosphates und 40 % Wasser ( mit 1 % Tylose) wird nach einem Tag an einem Silikatputz getestet. Es werden 6,66 g Paste pro 100 g Putz eingesetzt. Diagramm 3 zeigt den Härteverlauf des reinen Pulvers und den der Paste.

### Beispiel 4

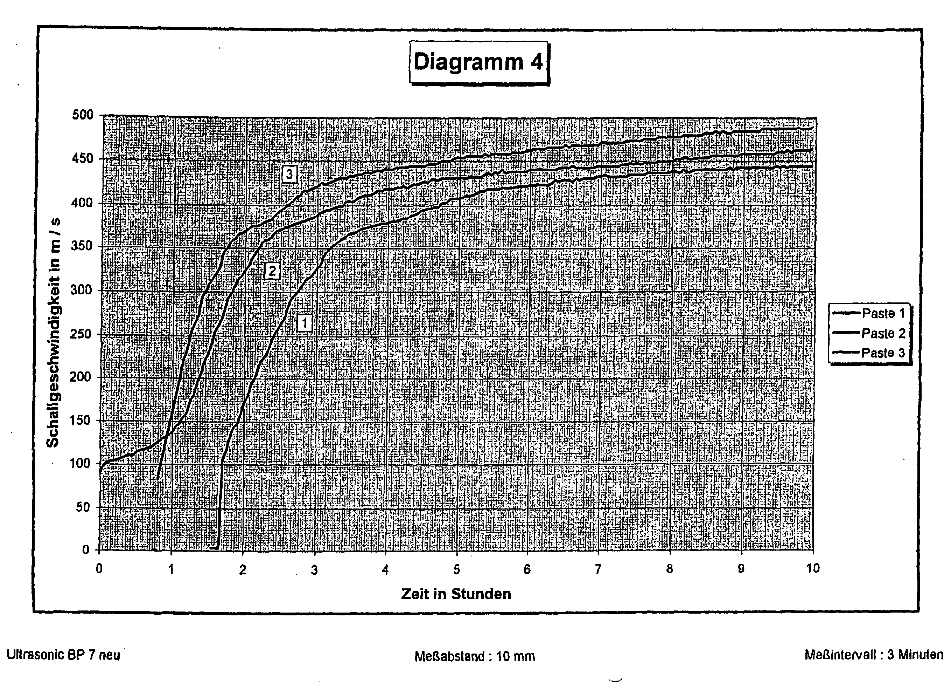

Aus 1-Butanol und dem polymeren Aluminiumphosphat wird eine 70 %ige Paste hergestellt ( Paste 1 ), desgleichen aus einem Blockpolymeren ( Polyethylenglycol-polypropylenglycolpolyethylenglycol ) als Flüssigkeit zur Suspendierung , eine 55 %ige Paste ( Paste 2 ) und aus Polypropylenglycol ebenfalls eine 55 %ige Paste ( Paste 3 ) hergestellt. Der Einsatz der Wirksubstanz ist bei allen drei Anwendungen gleich. Diagramm 4 zeigt das Härteverhalten an einem Silikatsystem.

### Beispiel 5

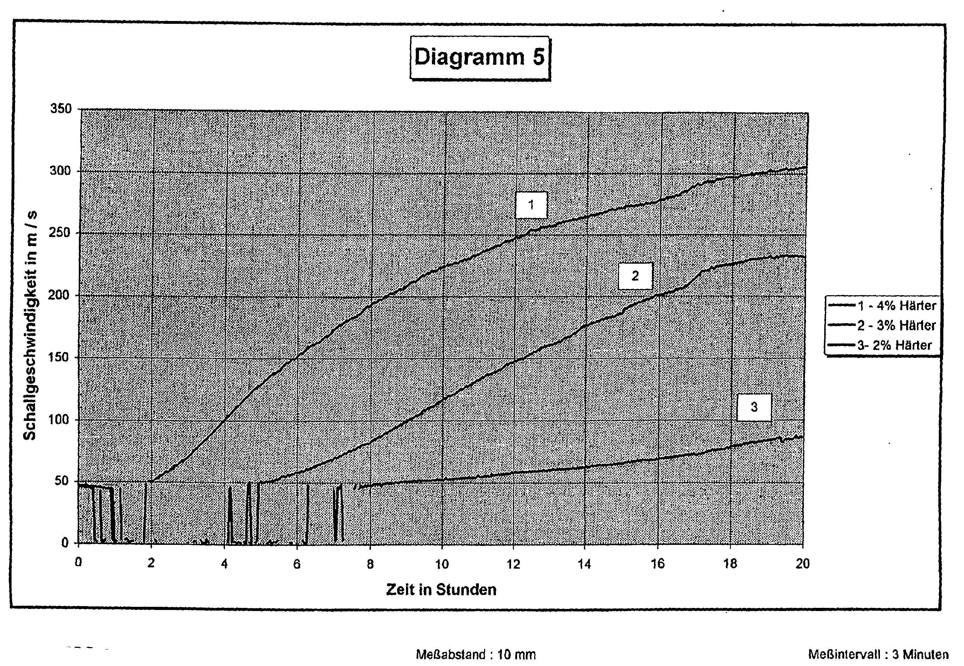

Polymeres Aluminiumphosphat wird dem Putz direkt als Pulver untergerührt. Diagramm 5 zeigt die offene Zeit des Putzes bei 4%, 3% und 2% Härterzusatz.

### Beispiel 6

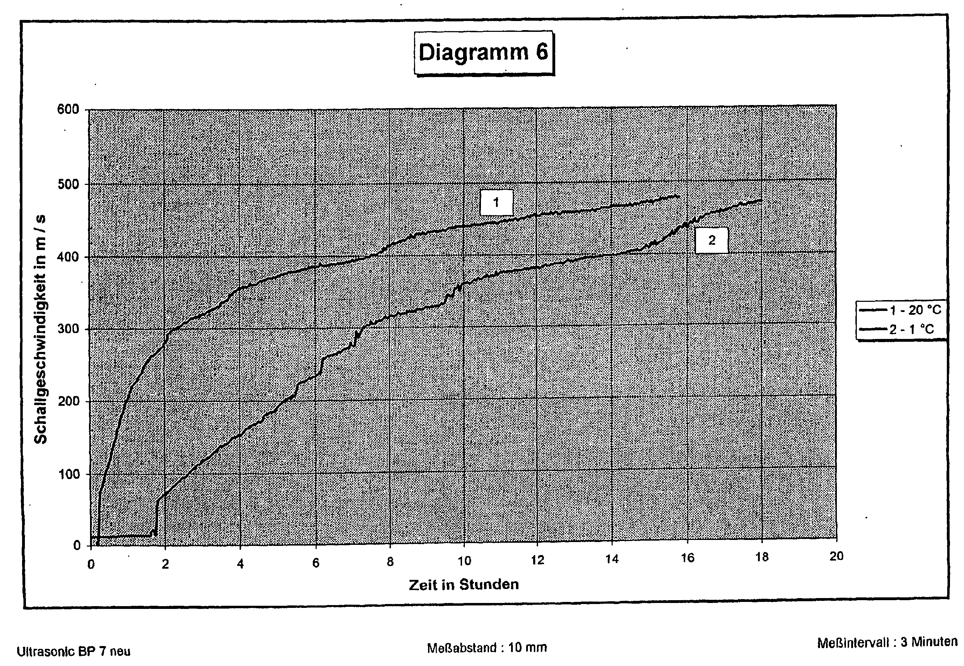

Einem Putz werden jeweils 3 % polymeres Aluminiumphosphat - Pulver zugesetzt. Diagramm 6 zeigt die Wirkung des Härters bei 20 °C und bei 1 °C.
Für Dispersions - Silikat - Putze wird hauptsächlich das Produkt Typ 2 eingesetzt.
Er zeigt in allen Putzen ein vergleichbares Wirkprinzip. Er reagiert mit dem Bindemittel Silikat und verfestigt dessen Struktur. Je nach eingesetzter Menge läßt sich die offene Zeit des Silikatputzes variieren.

### Beispiel 7

Einem Kunstharzputz mit 18 - % Bindemittelgehalt werden 1- % polymeres Aluminiumphosphat zugegeben. Vor der Anwendung des Putzes werden 2,5 % Kaliumwasserglas zugegeben. Es wurden Prüfplatten beschichtet und bei 40 °C im Kühlschrank gelagert. Beim Vergleich der Proben nach 24 h , stellt man fest, daß die Probe mit dem Zusatz fest ist, hingegen die andere Probe noch weich und nicht erhärtet ist.

Ein Zusatz von polymeren Aluminiumphosphat zu einem Kunstharzputz hat hier überraschend schnell die Erhärtung des Putzes bewirkt.
Unter Kunstharzputz versteht der Fachmann eine Dispersionsfarbe oder auch eine Kunststoffdispersionsfarbe auf der Basis von polymeren Dispersionen und Pigmenten, die als Anstrichstoffe verwendet werden.. Die Dispersionsfarben werden oft auch als Latexfarben oder summarisch auch als Binderfarben bezeichnet. Dispersionsfarben sind zu unterscheiden von Dispersionsfarbstoffen.

Abhängig von der Rezeptur des jeweiligen Putz-Herstellers gibt es Unterschiede in Bezug auf die zu erwartenden Abbindezeiten.

Um eine generelle Aussage über die Abbindecharakteristik zu machen, wurde im Labor an einem Modellsystem gearbeitet, welches Außeneinflüsse wie z.B. saugender Untergrund oder Verdunstung an der Oberfläche ausschaltet.
Dies wurde durch eine Meßform aus Kunststoff erreicht, welche auf einer Glasplatte liegt. Nach Einfüllen des Probeansatzes wurde die Form oben abgedeckt, so daß auch keine Feuchtigkeit entweichen konnte. Die Veränderungen im Putz sind somit nur als Wirkung des zugesetzten Härters zu interpretieren.

Beispiel 5 zeigt das Abbindediagramm von Silikatputzen bei Variation der Härterkonzentration. Mißt man Putz ohne Härterzusatz, so ergibt dieser Putz eine Schallgeschwindigkeit von etwa 50 m/s. Versuche wurden mit 2%, 3% und 4 %-igem Härterzusatz durchgeführt. Das Härterpulver wurde beim Start in den Putz eingerührt ( Rührzeit ca. 30 s ). Danach wurde unmittelbar in die Form eingefüllt und die Messung gestartet.
Der Härter bewirkt ein gezieltes Aushärten des Putzes, wobei die offene Zeit durch die eingesetzte Menge reguliert werden kann.

Die Reaktion erfolgt auch bei tiefer Temperatur und 100 % Luftfeuchte. Versuche in der Klimakammer bei 1 °C bestätigen diese Aussage. Sowohl die Meßform als auch die Schallköpfe und der eingesetzte Putz wurden zuvor auf 1 °C heruntergekühlt. Der kalte Putz wurde dann mit Härter versetzt und direkt danach die Messung gestartet.
Ergebnisse sind im Beispiel 6 zu sehen.

### Pulverförmige Systeme

Das Härtersystem ist noch besser bei pulverförmigen Putzen geeignet, weil der Härter schon bei der Produktion der Pulvermischung zugesetzt werden kann. In diesem Fall handelt es sich um ein Einkomponentensystem, dem nur noch das Anmachwasser im Anwendungsfall hinzugefügt werden muß.

### III. Anwendungstechnische Beispiele

### a. Anwendung von polymeren Aluminiumphosphat in Dispersions ― Silikatputz

Die im Modellverfahren gewonnenen Erkenntnisse wurden auch auf ein praxisnahes System übertragen. Dazu wurde der Putz einmal ohne Härter und im zweiten Fall mit Härterzugabe von 2% auf Prüfplatten aufgezogen.
Die Platten wurden daraufhin 24 Stunden lang bei 1 °C in der Klimakammer gelagert. In einem zweiten Versuch wurden frisch beschichtete Platten im Winter bei Temperaturen knapp über dem Gefrierpunkt 24 Stunden lang im Freien aufgestellt.

Die Prüfplatten wurden daraufhin in ein Wasserbad gestellt.
Ergebnis : Der Putz ohne Härter löste sich nach 10 Minuten auf und rutschte nach 20 Minuten von der Platte. Mit Härter ausgerüstet blieb der Putz völlig stabil.

Ein zweiter Test, bei dem die Prüfplatten mit einem Wasserstrahl 20 Minuten lang beregnet wurden, zeigte exakt das gleiche Resultat.

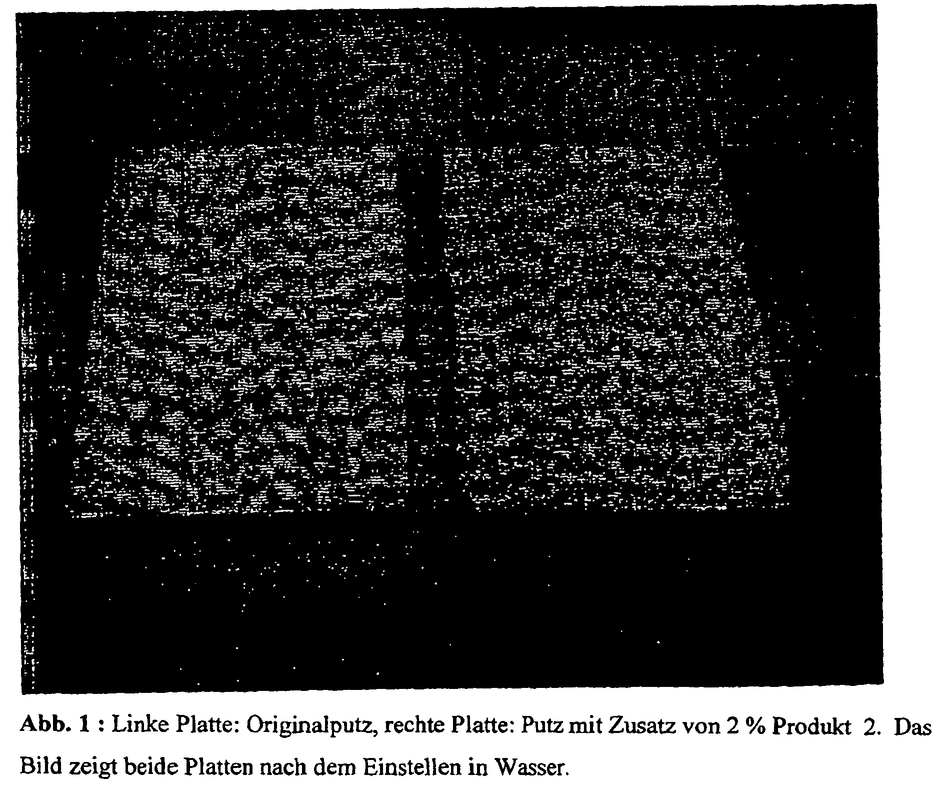

### b. Anwendung von polymeren Aluminiumphosphat in säurefestem Silikatmörtel

Säurefeste Mörtel werden im Kaminbau oder bei der Kaminsanierung , sowie bei der Erzeugung von säurefesten Bodenbeschichtungen eingesetzt. Darüber hinaus können flüssigkeitsführende Rohre ebenfalls damit ausgekleidet werden, z.B. im Kanalbau oder bei der Kanalsanierung.
Der säurefester Mörtel enthielt folgende Bestandteile: ( Füllstoffe, Produkt 1,Pulversilikat). Vor der Verarbeitung wird dem Gemisch das Anmachwasser untergerührt.

## Patentansprüche

1. Verwendung von polymeren Aluminiumphosphat als Mittel zur Regulierung der Abbindung, insbesondere der Härtung von Putzen, wobei das polymere Aluminiumphosphat folgende Eigenschaften aufweist.:
• P : Al Molverhältnis von 2: 1 bis 2,8 : 1
• das Verhältnis der durch Temperung erhältlichen Formen B und A bewegt sich zwischen 2: 1 bis 9 : 1
• der amorphe Materialanteil beträgt 15 bis 70 %, vorzugsweise 20 bis 50 %
• die Korngrößenverteilung D 50 beträgt 0,1 µm bis 100 µm
• der wasserlöslicher Anteil ist größer als 2 %
• der Gehalt an Al₄(P₄O₁₂)₃ ist größer als 1 %

2. Verwendung des polymeren Aluminiumphosphates als Mittel zur Regulierung der Abbindung nach Anspruch 1, **dadurch gekennzeichnet, daß** es insbesondere Kunstharzputzen in Mengen von 0,2 bis 2,5 Gew. % , bevorzugt, 0,5 bis 2 Gew. % zugesetzt wird.

3. Verwendung nach Anspruch 1 **dadurch gekennzeichnet, daß** das polymere Aluminiumphosphat in Form eines feinteiligen Pulvers verwendet wird

4. Verwendung nach Anspruch 1 **dadurch gekennzeichnet, daß** das polymere Aluminiumphosphat in Form einer wasserfreien Suspension verwendet wird.

5. Verwendung nach den Ansprüchen 1, 2 und 4, **dadurch gekennzeichnet, daß** als Flüssigkeiten für die Suspendierung wasserfreie, hydrophilen Lösemittel verwendet werden, wobei die Suspension bis 70 Gew. % Feststoffgehalt aufweist.

6. Verwendung nach den Ansprüchen 1 bis 4, **dadurch gekennzeichnet, daß** als Flüssigkeiten für die Suspendierung die wasserlöslichen niederen Alkohole, Copolymere von Ethylenoxid/Propylenoxid, die Blockpolymeren von Ethylenoxid/Propylenoxid, Mono- und Dimethylenglykol, Alkylether, insbesondere Triethylenglycolalkylether und Dipropylenglycolalkylether eingesetzt werden.

7. Verfahren zur Herstellung der Aluminiumphosphat- Suspension nach den Ansprüchen 4 und 5, durch Naßmahlung des pulverförmigen polymeren Aluminiumphosphates mit einer wasserfreien Flüssigkeit.

8. Verfahren zur Herstellung der polymeren Aluminiumphosphate nach Anspruch 1 durch Umsetzung von Phosphorsäure und Aluminiumhydroxid und/oder Aluminiumoxid, **dadurch gekennzeichnet ist, daß** Aluminiumhydroxid und/oder Aluminiumoxyd in der konzentrierter Phosphorsäure aufgelöst wird, die dabei entstandene Aluminiumdihydrogenphosphat-Lösung auf einem geeigneten Aggregat, vorzugsweise Sprüh-, Trommel- oder Walzentrockner, getrocknet wird und in einem zweiten Verfahrensschritt dieses Zwischenprodukt durch thermische Entwässerung zu polymeren Aluminiumpolyphosphat kondensiert wird, wobei der Wasserdampfdruck bei der Entwässerung mindestens 500 mbar beträgt und bei der Temperung ein Temperaturprofil durchfahren wird, das folgende Stufen enthält: 1. Stufe: nicht über 150 °C, 2. Stufe : 300 °C bis 500 °C und 3. Stufe: 500°C bis 700 °C

## Claims

1. Utilisation of polymeric aluminium phosphate as means for regulating the setting, in particular the hardening of plasters, whereby the polymeric aluminium phosphate has the following properties:
• P : AI molar ratio of 2 : 1 to 2.8 : 1 .
• The ratio of the forms B and A obtained by tempering lies between **2** : 1 and 9 :1 .
• The fraction of amorphous material amounts to 15 to 70 %, preferentially 20 to 50 %.
• The grain size distribution range D₅₀ is 0.1 µm to 100 µm.
• The water soluble fraction is greater than 2 %.
• The Al₄(P₄O₁₂)₃ content is greater than 1%.

2. Utilisation of polymeric aluminium phosphate as means for regulating the setting according to Claim 1, **characterised by** the feature that it is added in particular to synthetic resin plasters in amounts from 0.2 to 2.5 % by weight, preferentially 0.5 to 3 % by weight.

3. Utilisation according to Claim 1, **characterised by** the feature that the polymeric aluminium phosphate is used in the form of a fine grain powder.

4. Utilisation according to Claim 1, **characterised by** the feature that the polymeric aluminium phosphate is used in the form of a suspension containing no water.

5. Utilisation according to Claims 1, 2 and 4, **characterised by** the feature that hydrophilic solvents containing no water are used for making the suspension, whereby the suspension contains up to 70 % by weight of solid material.

6. Utilisation according to the Claims 1 to 4, **characterised by** the feature that the water soluble lower alcohols, copolymers of ethylene oxide / propylene oxide, the block polymers of ethylene oxide / propylene oxide, mono and dimethyl glycol, alkyl ethers, in particular triethylene glycol alkyl ether and dipropylene glycol alkyl ether, are used as liquids for making the suspension.

7. Method for producing the aluminium phosphate suspension according to Claims 4 and 5 by wet grinding of the powdered polymeric aluminium phosphate with a water-free liquid.

8. Method for producing the polymeric aluminium phosphate according to Claim 1 by the reaction of phosphoric acid and aluminium hydroxide and/or aluminium oxide, **characterised by** the feature that aluminium hydroxide and/or aluminium oxide is/are dissolved in the concentrated phosphoric acid, the resulting aluminium dihydrogen phosphate solution is dried on a suitable device, preferentially a spray, drum or roller dryer, and in a second process step this intermediate product is then condensed by thermal dehydration to polymeric aluminium polyphosphate, whereby the water vapour pressure during the dehydration is at least 500 mbar and for the tempering a temperature profile comprising the following stages is run through: 1^{st} stage: not exceeding 150 °C, 2^{nd} stage: 300 °C to 500 °C and 3^{rd} stage: 500 °C to 700 °C.

## Revendications

1. Emploi de phosphate d'aluminium polymère pour corriger une prise, notamment pour le durcissement d'un enduit. Le phosphate d'aluminium possède les propriétés suivantes :
• P : Al rapport molaire 2 :1 à 2,8 :1
• Le rapport entre les formes A et B obtenues par malléabilisation oscille de 2 :1 à 9 :1
• Le taux de matériau amorphe varie de 15 à 70% ; l'idéal étant 20 à 50%
• La répartition du calibre des grains D₅₀ varie de 0,1 µm à 100 µm
• Le taux de solubilité dans l'eau est > 2%
• Le taux en Al₄ (P₄O₁₂) est > 1%

2. Emploi de phosphate d'aluminium polymère pour corriger une prise selon la revendication 1 **caractérisée** surtout par l'ajout de cet élément dans les enduits en résine synthétique, les quantités oscillant entre 0,2 à 2,5% de son poids, l'idéal étant 0,5 à 2% du poids.

3. Emploi selon la revendication 1: **caractérisée par le fait que** le phosphate d'aluminium polymère s'utilise sous forme de poudre très fine.

4. Emploi selon la revendication 1: **caractérisée par le fait que** le phosphate d'aluminium polymère s'utilise sous forme de suspension sans eau.

5. Emploi selon les revendications 1, 2 et 3 : **caractérisée par le fait qu'**on utilise des solvants hydrophiles sans eau comme liquide, pour le procédé de suspension ; la suspension affiche un taux de matière solide pouvant aller jusqu'à 70% de son poids.

6. Emploi selon les revendications 1 à 4 : **caractérisée par le fait qu'**on utilise pour le procédé de suspension des alcools légers comme liquide, solubles dans l'eau notamment des copolymères d'oxyde d'éthylène ou d'oxyde de propylène, des polymères séquencés d'oxyde d'éthylène ou d'oxyde de propylène, du monométhylèneglycol et du diméthlèneglycol, de l'éther alcoyle notamment de l'éther alcoyle triéthylèneglycol et de l'éther alcoyle dipropylènegylcol.

7. Procédé pour fabriquer une suspension de phosphate d'aluminium selon les revendications 4 et 5 par broyage humide des phosphates d'aluminium polymère sous forme de poudre avec un liquide sans eau.

8. Procédé pour fabriquer des phosphates d'aluminium selon la revendication 1 en convertissant de l'acide orthophosphorique et de l'hydroxyde d'aluminium et/ou de l'oxyde d'aluminium. Est **caractérisé par le fait que** l'hydroxyde d'aluminium et/ou l'oxyde d'aluminium est dissout dans de l'acide orthophosphorique concentré. Il en résulte une solution à base de phosphate dihydrogènique d'aluminium. Elle doit être séchée dans un engin approprié: notamment un dispositif de séchage par pulvérisation, un séchoir à tambour ou un séchoir rotatif. Dans une deuxième étape le produit intermédiaire est condensé par déshydratation thermique pour être converti en polyphosphate d'aluminium. La pression de la vapeur d'eau doit être au moins à 500 mbar, lors de la malléabilisation on passe à différents niveaux de températures. Niveau 1: pas plus de 150°C. Niveau 2: 300°C à 500°C maxi. Niveau 3 : 500°C à 700°C.
